# EUROPEAN PATENT SPECIFICATION

(11) **EP 2 382 103 B1**
(45) Date of publication and mention of the grant of the patent: **21.12.2016**
(21) Application number: 08879292.4
(22) Date of filing: 29.12.2008
(51) Int. Cl.: B60G 21/055

(54) **STABILIZER ARRANGEMENT OF AN AXLE AND STABILIZER**
STABILISATORANORDNUNG EINER ACHSE UND STABILISATOR
DISPOSITIF STABILISATEUR D'UN ESSIEU ET STABILISATEUR

(43) Date of publication of application: 02.11.2011
(73) Proprietor: Volvo Lastvagnar AB, 405 08 Göteborg (SE)
(72) Inventor: SVENSSON, Roland, S-430 22 Väröbacka (SE); HENDRIKS, Jan, B-9230 Wetteren (BE)
(74) Representative: Volvo Technology Corporation
(86) International application number: PCT/SE2008/000748
(87) International publication number: WO 2010/077186

(56) References cited:
- EP-A1- 0 391 222
- EP-A2- 0 933 241
- EP-A2- 1 447 247
- WO-A1-2007/062744
- DE-A1-102004 045 523
- DE-A1-102006 032 161
- FR-A- 776 294
- FR-A1- 2 620 389
- FR-A1- 2 827 814
- US-A- 3 388 762
- US-B1- 7 234 713

## Description

### TECHNICAL FIELD

The invention relates to a stabilizer arrangement of an axle and a stabilizer for a stabilizer arrangement comprising according to the preambles of the independent claims.

### BACKGROUND OF THE INVENTION

It is known in the art that trucks can have a high centre of gravity for instance due to cargo carried by the trucks. Thus stabilizers with high stabilizing capabilities are required. Often, the stabilizer is part of the suspension geometry, combining the function of a stabilizer bar and the reaction stays for the geometry. Although being very compact and lightweight, such a stabilizer arrangement is limited in roll angle and stabilizer roll stiffness as a consequence as the roll angle generates a big lateral displacement of the axle relative to the chassis attachment. For a desired roll of e.g. about 6 degree, the lateral displacement is about 70 mm. Such a lateral displacement needs to be taken up by the lower arms in such a stabilizer arrangement, partly by the bushing in the front eye, partly by the bending of the lower arm plates. To allow for sufficient bending, the plates are limited in thickness, which limits the forces they can transfer and consequently results in limiting the roll stiffness. Additionally, the height of the plates is limited by packaging space of the surrounding parts.

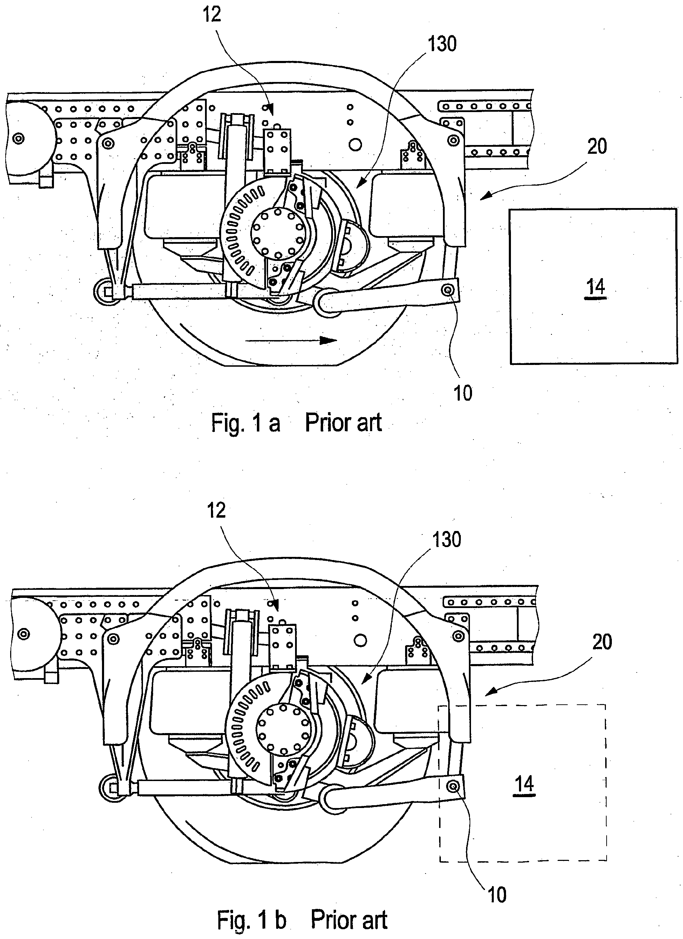

Stabilizers with a rearward mounted stabilizer bar are prone to damage during manoeuvres of the vehicle and have a limited lifting range of the suspension. A high lifting range is favourable for picking up swap bodies and other vehicle operations. During lifting, the angle between the stabilizer arm and the stabilizer linkage becomes very big. This angle might be not more than 165° for a proper operation of the stabilizer. To have an increased lifting range, this angle will grow towards 180° with the risk of blocking of the stabilizer arm and linkage, and there will be proximity problems between other suspension parts like the rear air bellows and the stabilizer linkage. The forces from the stabilizer will be transferred to the chassis via the stabilizer linkage. Because these linkages are placed rear of the axle, they will try to twist the frame rails, inducing a movement for the suspension components which creates an unwanted steering effect of the rear axle. Moreover, the stabilizer arms protrude out of the axle package and can easily be hit by obstacles e.g. when the vehicle is driving backwards, as can be seen in Figs. 1a and Fig. 1 b. Fig. 1a shows a stabilizer arrangement with a rearward placed stabilizer bar 10 and rearwards protruding linkage for stabilizing movements of a wheel 13 on a rear axle 130. The stabilizer arms and linkage protrude in an area at the rear part 20 of the vehicle which is unprotected against obstacles 14. If the vehicle drives backward, as shown by an arrow in Fig. 1a, an obstacle, e.g. a stone or a wall, may easily hit and damage the stabilizer 10, as illustrated in Fig. 1b.

For truck applications with a high centre of gravity (cog), an additional stabilizer can be added to such an installation to achieve a better roll stiffness. DE 10 2004 045 523 A1 discloses a rear axle of a truck which provides a stabilizer against swaying movements, at the lower steering plane of the axle body with an indirect mounting at the chassis. An additional stabilizer is arranged at the upper steering plane with a four-point mounting at the chassis.

Use of additional stabilizers is however limited due to space constraints in the chassis. Reinforced stabilizers tend to introduce additional forces into the chassis frame rails and into the axle and often, reinforced stabilizers are still not strong enough to fulfil the required stabilizing capabilities.

WO 2007/062744 describes a stabilizer arrangement comprising an arm beam pivotally mounted on the frame at its proximate end and coupled at its distal end to a guiding assembly enabling the arm to pivot in a vertical direction and to be restrained in later directions.

### SUMMARY OF THE INVENTION

It is an object of the invention to provide a stabilizer arrangement with high roll stiffness and less risk to be damaged by vehicle manoeuvres. Another object of the invention is to provide an improved stabilizer for a stabilizer arrangement.

Another object of the invention is to provide a vehicle comprising an improved stabilizer arrangement.

The objects are achieved by the features of the independent claims. The other claims and the description disclose advantageous embodiments of the invention.

A favourable stabilizer for an arrangement according to the invention for a non-reactive suspension of an axle, particularly of a heavy duty vehicle, comprises a torsion bar between two stabilizer arms, wherein at an outside of each stabilizer arm a projecting portion of the torsion bar is arranged and wherein the projecting portion constitutes a bearing for connecting the torsion bar to the axle.

It is a characteristic of a non-reactive suspension that the axle does not tilt when the vehicle height is changed, or, vice versa, that the vehicle height is not changed when the axle is tilted, e.g. when braking as is common in passenger cars.

The stabilizer provides favourable bearing positions for connecting the stabilizer to the chassis as well as to the axle. The stabilizer can perform rotational movements around a longitudinal axis of the stabilizer allows. The stabilizer arms can pivot about an axis parallel to the longitudinal axis of the stabilizer independent of the rotational movements of the stabilizer. Favourably, the torsion bar can be a cylindrical tube. A cylindrical tube provides favourable stiffness properties.

Favourably, the torsion bar can be projecting through an opening of at least one of the stabilizer arms forming the projecting portion. This arrangement can be easily manufactured. Additionally or alternatively, a projecting portion can be arranged on at least one stabilizer arm. The stabilizer arm can be fabricated with the projecting portion for attaching the torsion bar to the axle.

Favourably, the projecting portion can have a smaller diameter than the portion of the torsion bar between the two stabilizer arms. The projecting portion can engage a bushing for allowing rotational movements of the stabilizer.

According to a favourable embodiment of the invention, the stabilizer arms can be connected to the torsion bar in a rotational stiff manner. The connection can be provided by welding, by splines and the like.

According to another aspect of the invention, a stabilizer arrangement is proposed in a suspension of an axle, particularly an axle of a heavy duty vehicle, wherein the axle is arranged in the aft half of the vehicle, comprising at least two reaction stays and at least one stabilizer comprising a torsion bar between two stabilizer arms. According to an example embodiment not forming part of the present invention at least 50%, preferably at least 80%, of a length of a torsion bar is arranged inside a projection of an area encompassed by the two reaction stays.

Favourably, the stabilizer arrangement is confined within the axle and the reaction stays and does not protrude outside. Damage can be prevented from the stabilizer arrangement. The stabilizer arrangement is compact. Advantageously, the stabilizer arrangement can be employed in conjunction with an air suspension. Alternatively, the stabilizer arrangement works well in conjunction with a leaf suspension. The torsion bar is connected to the axle whereas the stabilizer arms are connected with a linkage to the chassis. As the stabilizer is used in conjunction with the reaction stays it is not a part of the suspension geometry. The suspension geometry is consisting of the axle, two reaction stays at the bottom, a V-stay at the top and fixing points in the frame rails for the V-stay and the reaction stays. The axle is surrounded by the two reaction stays at the bottom, the V-stay at the top and the fixing points in the frame rails for the V-stay and the reaction stays. Thus, the roll angle and the stabilizer roll stiffness are not limited by the suspension geometry. The suspension can be a non-reactive suspension.

According to a favourable embodiment of the invention, the axle is a driven axle. Driven axles are strongly restricted in available space. The stabilizer arrangement is a compact unit which saves precious space. The stabilizer unit can be used with single tires as well as with twin tires on the axle where space is even more limited than with single tires.

According to a favourable embodiment of the invention, the torsion bar can be attached to the axle via a bushing providing rotational freedom around a longitudinal axis of the torsion bar. Preferably, the bushing can be arranged around a projecting portion of the torsion bar projecting outward from each stabilizer arm. Particularly, the torsion bar can be attached to the axle via an intermediate bearing of a spring member. The stabilizer is not a part of the suspension geometry, thus increasing the roll stiffness of the stabilizer arrangement.

According to a favourable embodiment of the invention, the stabilizer arms connected to the torsion bar can be pivotably attached to the chassis. Preferably, the stabilizer arm can be connected to the chassis via a linkage rod attached to a reaction-rod frame anchorage Favourably, the stabilizer arrangement can redirect forces of the stabilizer in the chassis to avoid chassis steering effects caused by twisting the chassis frame rails.

According to a favourable embodiment of the invention, the linkage rod can be adapted to transfer vertical load of the stabilizer arm into the chassis. Preferably, the stabilizer arm can be connected to an intermediate bearing of the linkage rod. Favourably, the stabilizer arrangement can redirect forces of the stabilizer in the chassis to avoid chassis steering effects caused by twisting the chassis frame rails.

According to another aspect of the invention, a vehicle is proposed, particularly a truck, comprising a stabilizer arrangement wherein the stabilizer arrangement is arranged at an axle in the aft half of the vehicle. The vehicle has a bigger lifting range of the suspension than with prior art stabilizer arrangements.

Preferably, the vehicle is a heavy duty vehicle, such as a truck, a garbage truck, a central trailer towing vehicle, an asphalt spreader and the like. Favourably, the invention provides an increased stabilizer roll stiffness. Advantageously, forces of the stabilizer can be redirected in the chassis to avoid chassis steering effects, i.e. when forces twist the chassis frame rails which induce a movement of the suspension components, resulting in a steering effect of the rear axle during turning.

According to a favourable embodiment of the invention, the stabilizer can be arranged in front of the axle on the opposite side of the rear of the vehicle. Favourably, the stabilizer is protected against obstacles during manoeuvring of the vehicle.

Due to the space saving construction, the invention is particularly advantageous for driven axles, particularly for a non-steered axle. However, the invention can also be applied to steered axles or non-driven or dead axles.

### BRIEF DESCRIPTION OF THE DRAWINGS

The present invention together with the above-mentioned and other objects and advantages may best be understood from the following detailed description of the embodiments, but not restricted to the embodiments, wherein is shown schematically:
- Fig. 1a, 1 b: an example of a stabilizer arrangement according to the prior art;
- Fig. 2: a perspective and partially cut-away view of a stabilizer arrangement arranged at a rear axle;
- Fig. 3: a preferred stabilizer according to the invention;
- Fig. 4: details of the stabilizer arrangement of Fig. 2;
- Fig. 5: a view on a bottom of the stabilizer arrangement of Fig. 2;
- Fig. 6a, 6b: an example of suspension movement witch 6 degree roll (Fig. 6a) and of an angular movement of stabilizer arms during roll (Fig. 6b); and
- Fig. 7: a comparison of a way of functioning of a prior art stabilizer and a stabilizer according to the invention; and
- Fig. 8: a preferred vehicle according to the invention.

### DETAILED DESCRIPTION OF PREFERRED EMBODIMENTS OF THE INVENTION

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

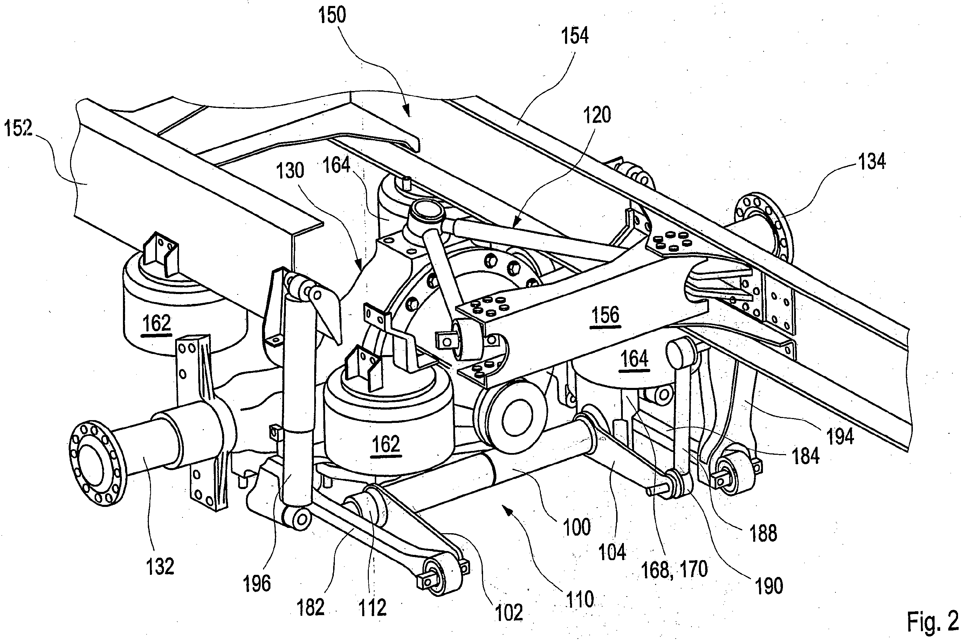

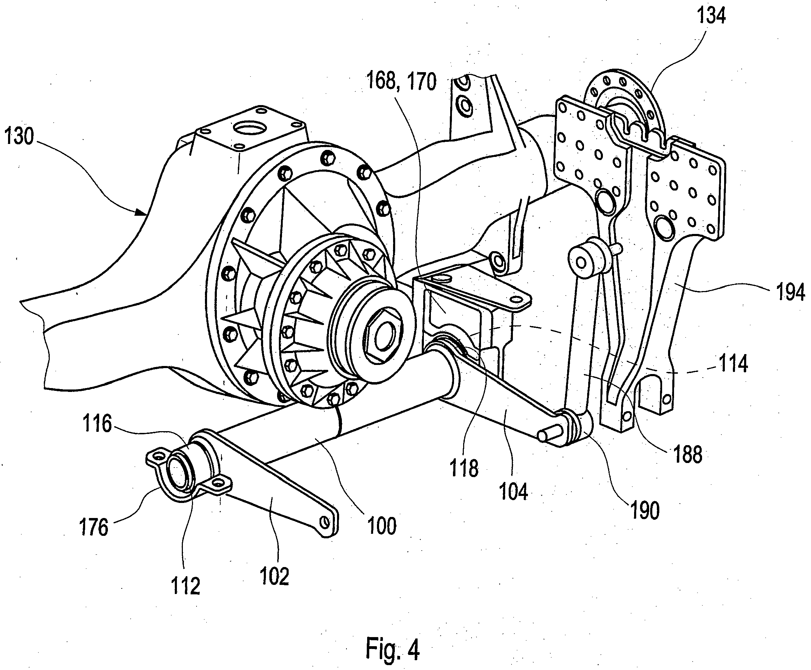

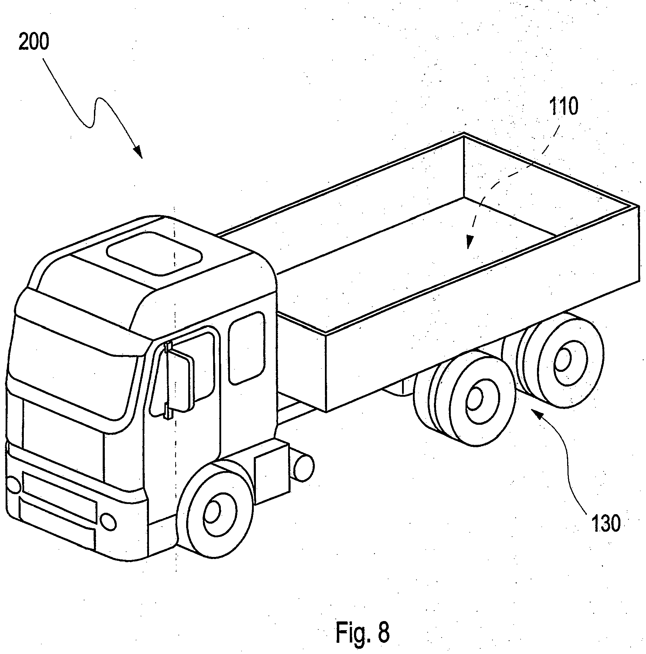

Fig. 2 depicts a perspective view of a part of a chassis frame 150 with frame rails 152 and 154 where the foremost part is partially cut away to give access to details of a preferred stabilizer arrangement and the suspension of the vehicle (200 in Fig. 8). Fig. 4 provides a detailed view of the connections of the stabilizer arrangement to the axle 130 and to the chassis by contour lines without the frame rails 152, 154. Two air bellows 162 are arranged below the frame rail 152 and two air bellows 164 are arranged below the frame rail 154, one in front of and one behind the axle 130 on each frame rail 152, 154. Between the frame rails 152, 154 a cross member 156 is arranged to which a V-stay 120 of the suspension is attached. Two dampers (only 196 illustrated in Fig. 2) are provided for damping vertical wheel movements. The arrangement is symmetric on both frame rails 152, 154. It is to be understood that due to the partial view some elements are left out for clarity which would otherwise hide elements behind. Therefore, some elements are only illustrated in conjunction with frame rail 154 but in reality are present also on the side frame rail 152.

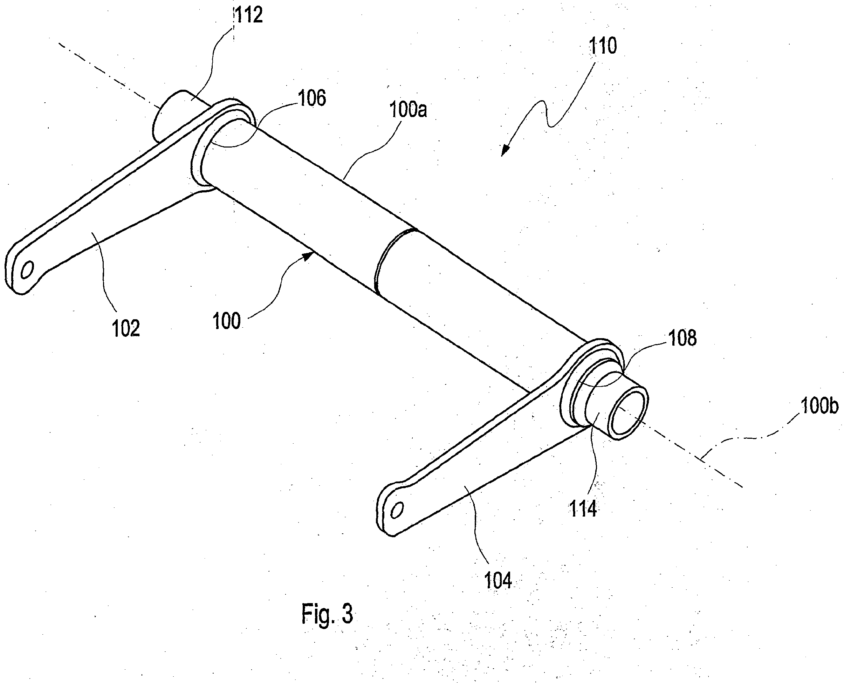

The stabilizer 110, shown in detail in Fig. 3, is provided for a non-reactive suspension of the axle 130 (with wheel carriers 132, 134), particularly of a heavy duty vehicle. The stabilizer 110 comprises a torsion bar 100 arranged between two stabilizer arms 102, 104. In this example embodiment, each stabilizer arm 102, 104 provides an opening 106, 108 (Fig. 3). The torsion bar 100 is projecting through the opening 106, 108 of each stabilizer arm 102, 104 with a projecting portion 112, 114. The projecting portion 112, 114 constitutes a bearing for connecting the torsion bar 100 to the axle 130.

The stabilizer bar 100 is arranged at the same side of the axle 130 as the reaction stays 182, 184 and located predominantly between the reaction stays 182, 184 and thus between the frame rails 152, 154. The vertical height of the stabilizer 110 is below the centre of axle 130.

Each of the stabilizer arms 102, 104 provides a bore for connecting the stabilizer arm 102, 104 to a stabilizer linkage (via joint 190 in Fig. 2).

The stabilizer arms 102, 104 are connected to the torsion bar 100 in a rotational stiff manner. The connection of the torsion bar 100 to the stabilizer arms 102, 104 can be achieved by different techniques such as welding, splines and the like.

The bearings provided by the projecting portions 112 and 114 allow a rotational movement of the torsion bar 100 about its longitudinal axis 100b. The torsion bar 100 can be made of a tube the diameter of the portion 100a between the stabilizer arms 102, 104 is smaller than the diameter of the projecting portions 112, 114. Thus, bushings, e.g. rubber bushings, can be comfortably arranged on the projecting portions of the torsion bar 100.

Referring back to Fig. 2 in conjunction with Fig. 4 (showing contour lines of the arrangement without the frame rails 152, 154), the torsion bar 100 (also known as stabilizer bar or anti-roll bar) is placed in front of the casing of the rear axle 130. The torsion bar 100 is connected to the axle 130 via the intermediate unit 168 of the air spring member (air bellows 164), particularly a spring hanger 170, at the side of the stabilizer 110 with respect to the axle 130. The projecting portion 114 of the torsion bar 100 and the surrounding bushings may be clamped between a recess in the underside 174 of intermediate unit 168 and a holder 178 at the side of the frame rail 154. The projecting portion 112 of the torsion bar 100 is clamped likewise with a holder 176 to an underside of an intermediate unit on the side of the frame rail 152 but is not explicitly depicted in the drawings for clarity reasons.

The torsion rod 100 is attached on each side to the intermediate unit (168 for the air bellows 164 on the frame rail 154 in front of the axle 130, not shown for the air bellows 162 on the frame rail 152) via a bushing 116 on the projecting portion 112 and bushing 118 on the projecting portions 114 (depicted in Fig. 4).

In this arrangement, the stabilizer 110 is placed inside the suspension environment. Favourably, the original geometry of the suspension, which is determined by the V-stay 120 and the two reaction stays 182, 184, is not changed by the stabilizer arrangement. The reaction stays 182, 184 are attached to the reaction stay frame anchorage 194 attached to the frame rail 154 (the complementary reaction stay frame anchorage attached to frame rail 152 is not shown).

The suspension performs vertical movement, up and down, and a rotational movement, known as roll, with its centre of rotation located in the V-stay 120 attachment to the axle 130. Usually, the total vertical movement is required to be more then 350 mm, the roll angle around 6 degrees. The torsion bar 100 has to be able to follow these movements.

The torsion bar 100 follows the movement of the rear axle 130, as it is fixed to the rear axle casing via the intermediate 168 of the air bellows 164. The bushings 116, 118 (rubber or any other type) used to mount the cylindrical projecting portions 112, 114 of the torsion bar 100 to the air bellows 162, 164 in front of the axle 130, provide a rotational freedom around the axis 110b (fig. 3) of the torsion bar 100 of the stabilizer 110.

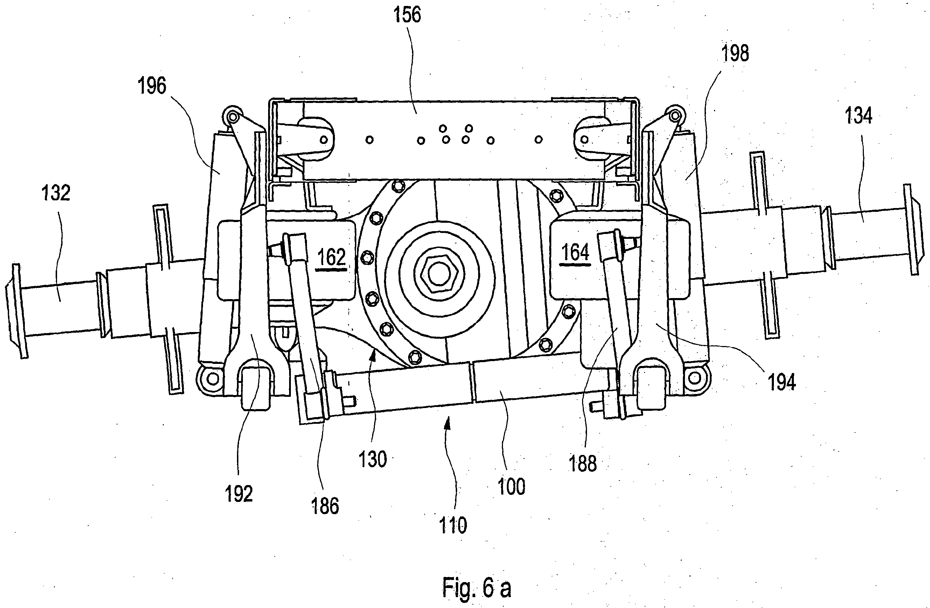

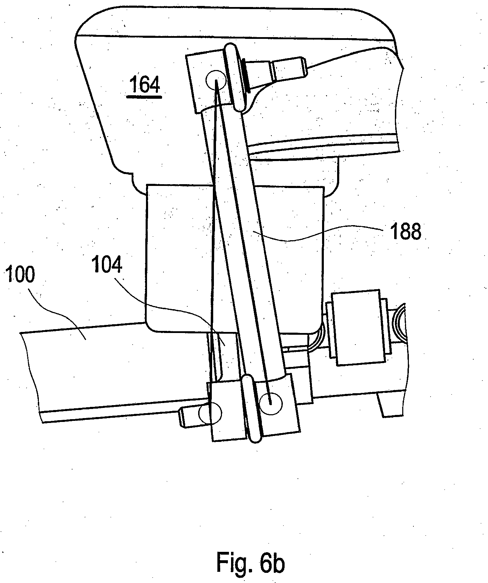

The stabilizer arms 102, 104 are attached to the chassis structure via the intermediate unit 190 of linkage rods (only linkage rod 188 towards frame rail 154 is illustrated, the complementary linkage rod 185 towards frame rail 152 is shown in Fig. 6), which are attached to the reaction stay frame anchorage 194 on each frame rail 152, 154.

The linkage rods 186, 188 can be of different concepts and material. The eyes can comprise balljoints or rubber bushings; the body can be a formed part, formed by casting, forging, or a sheet metal tube or bar.

The linkage rods need to be able to transfer the vertical load of the stabilizer arms 102, 104 into the chassis and be able to cope with the lateral displacement during suspension roll.

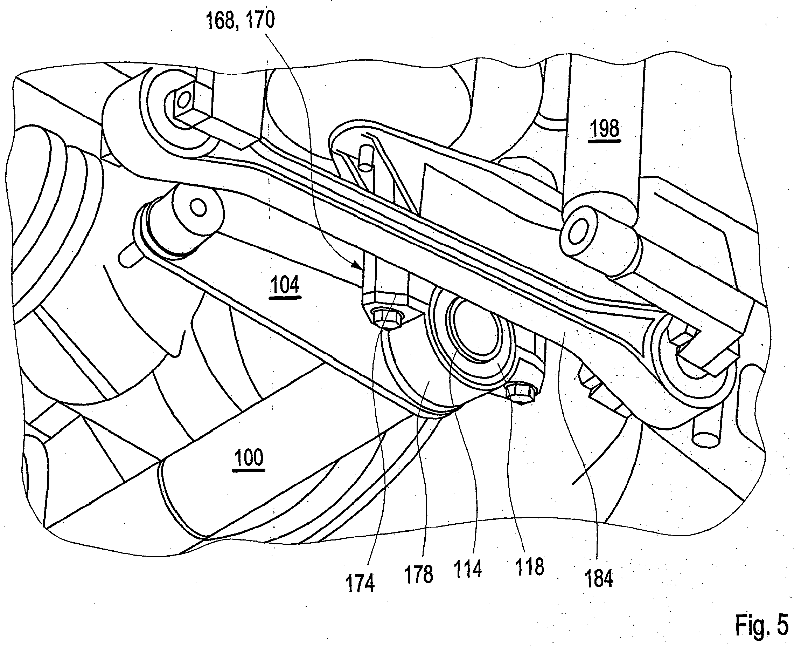

Referring now to Fig. 5, a view from below on the stabilizer arrangement of Fig. 2 is shown depicting the reaction stay 184 on the outer side and the torsion bar 100 with the stabilizer arm 104 inside the area defined by the reaction stay 184 and its complementary reaction stay 182 (Fig. 2). The torsion bar 100 is virtually on the same vertical height over ground as the reaction stay 184.

As can be seen, the projecting portion 114 of the torsion rod 100 is surrounded by a bushing 118 and clamped between a curved holder 178 formed as a clip collar and a recess in the underside 174 of the intermediate unit 168 of the spring hanger 170. The torsion bar 100 is close to the axial height of the damper 198, particularly between the damper 198 and the axle 130.

As can be easily seen in the front view of Figs. 6a and 6b, the linkage rods 186, 188 need to be able to cope with the lateral displacement during suspension roll. Fig. 6a shows a suspension movement with the axle 130 tilted about 6 degree.

The wheel (not shown) on wheel carrier 134 is on a higher position than the wheel (not shown) on wheel carrier 132.

The front view depicts the air bellows 162 and the damper 196 connected to the reaction stay frame anchorage 192 of the reaction stay 182 (Fig. 2) on the frame rail 152 and the air bellows 164 and the damper 198 connected to the reaction stay frame anchorage 194 of the reaction stay 184 (Fig. 2) on the frame rail 154.

The linkage rods 186, 188 show a large deflection towards the side of the elevated wheel carrier 134 due to the 6 degree roll.

Fig. 6b illustrates the resulting angular movement of the stabilizer linkage rod 188, during roll. In the equilibrium position, the linkage rod 188 is perpendicular. The deflection due to the 6 degree roll is indicated by the tilted position of the stabilizer rod 188.

During a vertical movement of the suspension, an angle a between the stabilizer arm 102, 104 and its linkage rod 186, 188 will change. This angle α is one of the limiting factors for the current suspension to have an increased vertical suspension movement. The current invention provides a favourable increased vertical movement as the angle α is smaller as in prior art systems when vehicle is out of normal height, i.e. angle α in cases when reaction stay is not horizontal. Because of the direction of the reaction stay 184 the axle 130 moves into the direction of the reaction stays 182, 184 and/or stabilizer arms 102, 104.

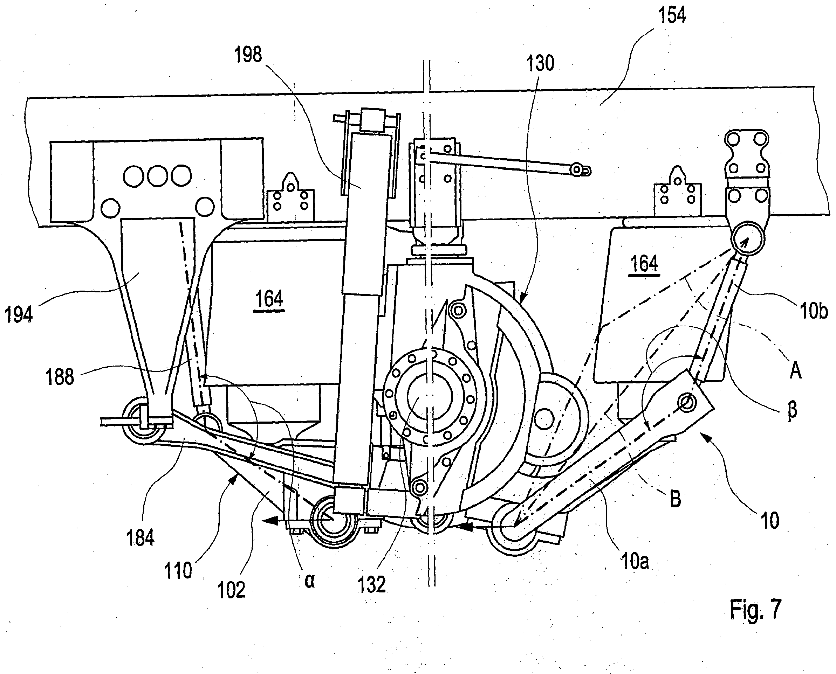

Fig. 7 illustrates on the right hand side a rearward mounted prior art stabilizer 10 on a rear axle 130 whereas on the left hand side a stabilizer arrangement with a stabilizer 110 according to the invention is schematically indicated for comparison by dash-dotted lines symbolizing the stabilizer arm 104 and a linkage rod 188.

When the increasing the vertical suspension lifting, the angle between the stabilizer arm 10a and linkage 10b of the prior art stabilizer 10 increases to nearly 180°, increasing the risk to "flipping over" or blocking. "Flipping over" is represented by line A and blocking is represented by line B. The angle is increased further by a forward movement of the axle 130 due to the suspension geometry which is nearly a parallelogram of the reaction stay 184 and the V-stay (not shown), particularly due to the direction of the reaction stay 184, providing a parallelogram-like motion. Particularly, the parallelogram is defined by the reaction stays 182, 184 and the V-stay 120 and the fixing points to the axle 130 and the fixing point to the frame rails 152, 154. The parallelogram is the reason for the characteristic "non-reactive" of the suspension.

In contradistinction to this, the forward placed stabilizer 110 benefits from a forward movement of the axle 130 (indicated by an arrow close to the foot of the damper 198) as it decreases the angle α between the stabilizer arm 104 and the linkage rod 188. For instance, for a suspension lifting of about 250 mm from the driving height, the angle α is about 145° which is well below a maximum allowed limit of about 165°.

Favourably, the stabilizer arrangement according to the invention has no impact on existing part interfaces towards axle and chassis.

Fig. 8 illustrates a preferred truck 200 equipped with a stabilizer arrangement comprising a stabilizer 110 according to the invention. The stabilizer arrangement is arranged at an axle 130 in the aft half of the truck 200. Generally, the stabilizer 110 may be arranged in front of the axle 130 or behind the axle 130 wherein in front of the axle 130 means between the axle 130 and the cab of the truck and behind the axle 130 means the stabilizer 110 being placed towards the rear end of the truck 200, depending on the location of the reaction stays. For instance, for twin axles the reaction stays are pointing to the rear of the vehicle, and thus the stabilizer 110 and the V-stay will point to the same direction.

## Claims

1. An arrangement comprising a suspension of an axle (130), particularly of a heavy duty vehicle, and a stabilizer arrangement, **characterized in that** the axle (130) is arranged in the aft half of the vehicle (200), the arrangement comprising at least two reaction stays (182, 184) for connecting the axle (130) to the chassis and wherein the stabilizer arrangement comprises at least one stabilizer (110) comprising a torsion bar (100) between two stabilizer arms (102, 104), wherein the torsion bar (100) and the two reaction stays (182, 184) are arranged at the same side of the axle (130), wherein the torsion bar (100) and the two stabilizer arms (102, 104) are located predominantly between the reaction stays (182, 184), so that the length of the torsion bar (100) is arranged inside a projection of an area encompassed by the two reaction stays (182, 184).

2. The arrangement according to claim 1, **characterized in that** the axle (130) is a driven axle (130).

3. The arrangement according to claim 1 or 2, **characterized in that** the stabilizer (110) is positioned between the frame rails (152, 154).

4. The arrangement according to anyone of the preceding claims, **characterized in that** the stabilizer (110) is positioned below the centre of the axle (130).

5. The arrangement according to anyone of the preceding claims, **characterized in that** the torsion bar (100) is attached to the axle (130) via a bushing (116, 118) providing rotational freedom around a longitudinal axis (100b) of the torsion bar (100).

6. The arrangement according to claim 5, **characterized in that** the bushing (116, 118) is arranged around a projecting portion (112, 114) of the torsion bar (100) projecting outward from each stabilizer arm (102, 104).

7. The arrangement according to claim 6, **characterized in that** the projecting portion (112,114) has a smaller diameter than the portion (100a) of the torsion bar (100) between the two stabilizer arms (102, 104).

8. The arrangement according to anyone of the preceding claims, **characterized in that** the torsion bar (100) is attached to the axle (130) via an intermediate bearing (166, 168) of a spring member (162, 164).

9. The arrangement according to anyone of the preceding claims, **characterized in that** at least one of the stabilizer arms (102, 104) connected to the torsion bar (100) is pivotably attached to the chassis (150).

10. The arrangement according to claim 9, **characterized in that** the stabilizer arm (102, 104) is connected to the chassis (150) via a linkage rod (186, 188) attached to a reaction-rod frame anchorage (192, 194).

11. The arrangement according to claim 10, **characterized in that** the linkage rods (186, 188) are adapted to transfer vertical load of the stabilizer arm (102, 104) into the chassis (150).

12. The arrangement according to anyone of the preceding claims, **characterized in that** the stabilizer arm (102, 104) is connected to an intermediate bearing of the linkage rod (186, 188).

13. The arrangement according to anyone of the preceding claims, **characterized in that** the suspension is non-reactive.

14. A vehicle, particularly a heavy duty vehicle, comprising an arrangement according to one of the preceding claims, wherein the stabilizer arrangement is arranged at an axle (130) in the aft half of the vehicle (200).

15. The vehicle according to claim 14, wherein the stabilizer (110) is arranged in front of the axle (130) on the opposite side of the rear of the vehicle.

16. The vehicle according to claim 14 or 15, wherein the suspension is non-reactive.

## Patentansprüche

1. Anordnung, die eine Aufhängung einer Achse (130) insbesondere eines Schwerlastfahrzeugs und eine Stabilisatoranordnung umfasst, **dadurch gekennzeichnet, dass** die Achse (130) in der hinteren Hälfte des Fahrzeugs (200) angeordnet ist, wobei die Anordnung wenigstens zwei Reaktionsstreben (182, 184) zum Verbinden der Achse (130) mit dem Chassis umfasst und wobei die Stabilisatoranordnung wenigstens einen Stabilisator (110) umfasst, der einen Torsionsstab (100) zwischen zwei Stabilisatorarmen (102, 104) umfasst, wobei der Torsionsstab (100) und die zwei Reaktionsstreben (182, 184) auf derselben Seite der Achse (130) angeordnet sind, wobei der Torsionsstab (100) und die zwei Stabilisatorarme (102, 104) im Wesentlichen zwischen den Reaktionsstreben (182, 184) angeordnet sind, so dass die Länge des Torsionsstabs (100) innerhalb einer Projektion einer Fläche angeordnet ist, die von den zwei Reaktionsstreben (182, 184) umschlossen ist.

2. Anordnung nach Anspruch 1, **dadurch gekennzeichnet, dass** die Achse (130) eine angetriebene Achse (130) ist.

3. Anordnung nach Anspruch 1 oder 2, **dadurch gekennzeichnet, dass** der Stabilisator (110) zwischen den Rahmenschienen (152, 154) positioniert ist.

4. Anordnung nach einem der vorigen Ansprüche, **dadurch gekennzeichnet, dass** der Stabilisator (110) unterhalb des Zentrums der Achse (130) positioniert ist.

5. Anordnung nach einem der vorigen Ansprüche, **dadurch gekennzeichnet, dass** der Torsionsstab (100) über eine Buchse (116, 118) an der Achse (130) befestigt ist, wodurch eine Drehfreiheit um eine Längsachse (100b) des Torsionsstabs (100) gewährleistet ist.

6. Anordnung nach Anspruch 5, **dadurch gekennzeichnet, dass** die Buchse (116, 118) um einen vorstehenden Abschnitt (112, 114) des Torsionsstabs (100) angeordnet ist, der von jedem Stabilisatorarm (102, 104) nach außen vorsteht.

7. Anordnung nach Anspruch 6, **dadurch gekennzeichnet, dass** der vorstehende Abschnitt (112, 114) einen kleineren Durchmesser als der Abschnitt (100a) des Torsionsstabs (100) zwischen den zwei Stabilisatorarmen (102, 104) hat.

8. Anordnung nach einem der vorigen Ansprüche, **dadurch gekennzeichnet, dass** der Torsionsstab (100) über ein Zwischenlager (166, 168) eines Federelements (162, 164) an der Achse (130) befestigt ist.

9. Anordnung nach einem der vorigen Ansprüche, **dadurch gekennzeichnet, dass** wenigstens einer der mit dem Torsionsstab (100) verbundenen Stabilisatorarme (102, 104) schwenkbar an dem Chassis (150) befestigt ist.

10. Anordnung nach Anspruch 9, **dadurch gekennzeichnet, dass** der Stabilisatorarm (102, 104) über eine Verbindungsstange (186, 188), die an einer Verankerung des Reaktionsstabrahmens (192, 194) befestigt ist, mit dem Chassis (150) verbunden ist.

11. Anordnung nach Anspruch 10, **dadurch gekennzeichnet, dass** die Verbindungsstangen (186, 188) dafür eingerichtet sind, vertikale Last des Stabilisatorarms (102, 104) in das Chassis (150) zu übertragen.

12. Anordnung nach einem der vorigen Ansprüche, **dadurch gekennzeichnet, dass** der Stabilisatorarm (102, 104) mit einem Zwischenlager der Verbindungsstange (186, 188) verbunden ist.

13. Anordnung nach einem der vorigen Ansprüche, **dadurch gekennzeichnet, dass** die Aufhängung nicht reaktiv ist.

14. Fahrzeug, insbesondere Schwerlastfahrzeug, das eine Anordnung nach einem der vorigen Ansprüche umfasst, bei dem die Stabilisatoranordnung an einer Achse (130) in der hinteren Hälfte des Fahrzeugs (200) angeordnet ist.

15. Fahrzeug nach Anspruch 14, bei dem der Stabilisator (110) vor der Achse (130) auf der gegenüberliegenden Seite des Fahrzeughecks angeordnet ist.

16. Fahrzeug nach Anspruch 14 oder 15, bei dem die Aufhängung nicht reaktiv ist.

## Revendications

1. Agencement comprenant une suspension d'un essieu (130), en particulier d'un véhicule lourd, et un agencement de stabilisateur, **caractérisé en ce que** l'essieu (130) est agencé dans la moitié arrière du véhicule (200), l'agencement comprenant au moins deux tirants de réaction (182, 184) pour relier l'essieu (130) au châssis et dans lequel l'agencement de stabilisateur comprend au moins un stabilisateur (110) comprenant une barre de torsion (100) entre deux bras de stabilisateur (102, 104), dans lequel la barre de torsion (100) et les deux tirants de réaction (182, 184) sont agencés sur le même côté de l'essieu (130), dans lequel la barre de torsion (100) et les deux bras de stabilisateur (102,104) sont situés principalement entre les tirants de réaction (182, 184), de sorte que la longueur de la barre de torsion (100) soit agencée à l'intérieur d'une projection d'une zone couverte par les deux tirants de réaction (182, 184).

2. Agencement selon la revendication 1, **caractérisé en ce que** l'essieu (130) est un essieu moteur (130).

3. Agencement selon la revendication 1 ou 2, **caractérisé en ce que** le stabilisateur (110) est positionné entre les longerons de cadre de châssis (152, 154).

4. Agencement selon l'une quelconque des revendications précédentes, **caractérisé en ce que** le stabilisateur (110) est positionné en dessous du centre de l'essieu (130).

5. Agencement selon l'une quelconque des revendications précédentes, **caractérisé en ce que** la barre de torsion (100) est fixée à l'essieu (130) par l'intermédiaire d'une douille (116, 118) assurant une liberté de rotation autour d'un axe longitudinal (100b) de la barre de torsion (100).

6. Agencement selon la revendication 5, **caractérisé en ce que** la douille (116, 118) est agencée autour d'une partie en saillie (112, 114) de la barre de torsion (100) faisant saillie vers l'extérieur depuis chaque bras de stabilisateur (102, 104).

7. Agencement selon la revendication 6, **caractérisé en ce que** la partie en saillie (112, 114) a un diamètre inférieur à celui de la partie (100a) de la barre de torsion (100) entre les deux bras de stabilisateur (102, 104).

8. Agencement selon l'une quelconque des revendications précédentes, **caractérisé en ce que** la barre de torsion (100) est fixée à l'essieu (130) par un palier intermédiaire (166, 168) d'un élément de ressort (162, 164).

9. Agencement selon l'une quelconque des revendications précédentes, **caractérisé en ce qu'**au moins l'un des bras de stabilisateur (102, 104) reliés à la barre de torsion (100) est fixé en pivotement au châssis (150).

10. Agencement selon la revendication 9, **caractérisé en ce que** le bras de stabilisateur (102,104) est relié au châssis (150) par l'intermédiaire d'une tige de liaison (186, 188) fixée à un ancrage de cadre de tige de réaction (192, 194).

11. Agencement selon la revendication 10, **caractérisé en ce que** les tiges de liaison (186, 188) sont adaptées pour transférer une charge verticale du bras de stabilisateur (102, 104) dans le châssis (150).

12. Agencement selon l'une quelconque des revendications précédentes, **caractérisé en ce que** le bras de stabilisateur (102, 104) est relié à un palier intermédiaire de la tige de liaison (186, 188).

13. Agencement selon l'une quelconque des revendications précédentes, **caractérisé en ce que** la suspension est non-réactive.

14. Véhicule, notamment un véhicule lourd, comprenant un agencement selon l'une des revendications précédentes, dans lequel l'agencement de stabilisateur est agencé sur un essieu (130) dans la moitié arrière du véhicule (200).

15. Véhicule selon la revendication 14, dans lequel le stabilisateur (110) est agencé en face de l'essieu (130) sur le côté opposé de l'arrière du véhicule.

16. Véhicule selon la revendication 14 ou 15, dans lequel la suspension est non-réactive.
